# EUROPÄISCHE PATENTSCHRIFT

(11) **EP 3 456 202 B1**
(45) Veröffentlichungstag und Bekanntmachung des Hinweises auf die Patenterteilung: **06.11.2019**
(21) Anmeldenummer: 18158137.2
(22) Anmeldetag: 22.02.2018
(51) Int. Cl.: A21B 3/13, A23G 9/50, A23G 9/22, A21B 5/02

(54) **INDUSTRIELL HERGESTELLTE WAFFEL MIT GESTALTUNG SOWIE BACKFORM UND VERFAHREN ZUR HERSTELLUNG DERSELBEN**
INDUSTRIALLY PRODUCED WAFFLE WITH DESIGN AS WELL AS BAKING MOULD AND METHOD FOR PRODUCING THE SAME
GAUFRETTE DE CONCEPTION FABRIQUÉE INDUSTRIELLEMENT AINSI QUE MOULE DE CUISSON ET PROCÉDÉ POUR LA FABRICATION DE LADITE GAUFRETTE

(30) Priorität: 13.09.2017 DE 102017121207
(43) Veröffentlichungstag der Anmeldung: 20.03.2019
(73) Patentinhaber: Oexmann GmbH & Co. KG, 45881 Gelsenkirchen (DE)
(72) Erfinder: Oexmann, Thomas, 45881 Gelsenkirchen (DE); Oexmann, Monika, 45881 Gelsenkirchen (DE)
(74) Vertreter: Ostriga Sonnet Wirths & Vorwerk

(56) Entgegenhaltungen:
- DE-U1-202008 011 813
- GB-A- 492 940
- GB-A- 508 707
- US-A- 2 358 452
- US-A- 2 759 826
- US-A1- 2008 113 069

## Beschreibung

Die Erfindung betrifft eine Waffel in Kegelform als Nahrungsmittel, mit einer ersten Seite, deren Oberfläche mittels eines technischen Musters vergrößert ist, um während des Herstellungsverfahrens eine definierte Anhaftung an einer der Backplatte sicherzustellen und Angriffsflächen für ein Aufnahmewerkzeug zu bieten, insbesondere mit einem Muster aus parallel zueinander angeordneten Stegen oder Nuten, mit einer zweiten Seite, deren Oberfläche kleiner ist als die der ersten Seite.

Solche Waffeln, insbesondere zur Aufnahme von Speiseeis, sind aus dem druckschriftlich nicht belegbaren Stand der Technik hinlänglich bekannt. Sie weisen in der Regel eine Außenseite mit einer rautenähnlichen Struktur auf. Hierzu ist die Waffel in der Regel mit Stegen versehen, die parallel zueinander angeordnet sind, wobei sich kreuzende Stege häufig zueinander einen Winkel von 90 Grad einnehmen.

Das Rautenmuster als technisch bedingtes Muster entsteht durch das übliche Herstellungsverfahren solcher Waffeln. Bei der industriellen Fertigung wird Waffelteig auf eine erste Backplatte einer Backform aufgebracht, welche eine den Waffelstegen entsprechende Gravur aufweist. Hierdurch wird die Oberfläche der Waffel bzw. der unteren Backplatte der Backform vergrößert. Die zweite Backplatte, welche nach dem Teigauftrag auf die erste Backplatte aufgelegt wird, um die Backform zum Zwecke des Backens zu schließen, ist gravurlos gehalten und somit eben. Die größere Oberfläche der ersten Backplatte hat eine vergrößerte Grenzfläche zwischen Waffel und Backplatte zur Folge, weshalb beim Öffnen der Backplatte die Anhaftung des gebackenen Waffelblattes an der mit Gravur versehenen ersten Backplatte größer ist als an der zweiten Backplatte. In Folge dessen ist gewährleistet, dass das gebackene Waffelblatt an der ersten, gravierten Backplatte anhaftet.

Zum Abnehmen des gebackenen Waffelblattes wird ein Aufnahmewerkzeug eingesetzt. Hierbei handelt es sich in der Regel um ein Entnahmemesser mit voreilenden Zinken und mit zwischen den Zinken angeordneten Messerschneiden. Die Zinken greifen in die Gravurlinien der ersten Backplatte ein und untergreifen den in die Gravurlinien eingedrungen, ausgebackenen Waffelteig. Auf diese Weise wird das Waffelblatt angehoben, was das Lösen des Waffelblattes und das Untergreifen der Messerschneiden unter das Waffelblatt erheblich fördert.

Es versteht sich, dass bei dieser Form der industriellen Waffelherstellung das technische Muster der Waffel bzw. die Gravur der Backplatte ausschließlich den Erfordernissen des Backvorganges genügen muss, so dass die Gestaltung der Waffelaußenseite allenfalls durch die Wahl des Abstandes der Gravurlinien der Backplatte bzw. der von der Waffeloberfläche ausgebildeten Stege möglich ist. Der Abstandswahl sind jedoch enge Grenzen gesetzt, damit das Zusammenspiel von Aufnahmezinken und Messerschneiden beim Entnehmen des ausgebackenen Waffelblattes von der gravierten Backplatte gewährleistet ist.

Die Erfindung betrifft darüber hinaus eine Backform zur Herstellung eines Waffelblattes, welches zu einer Waffel gemäß einem der Ansprüche 1 bis 2 formbar ist, mit einer ersten Backplatte, deren Backseite mit einer technischen Gravur versehen ist, mittels derer die Oberfläche des Waffelblattes vergrößert wird, um eine Anhaftung an dieser ersten Backplatte zu gewährleiten, und mit einer zweiten Backplatte, deren Backseite eine Oberfläche aufweist, die kleiner ist als die Oberfläche der ersten Backplatte.

Solche ebenfalls aus dem druckschriftlich nicht belegbaren Stand der Technik bekannten Backformen zur Herstellung von Waffelblättern, welche zu kegelförmigen Waffeln aufgerollt werden, sind ebenfalls hinlänglich bekannt. Sie werden eingesetzt in der industriellen Fertigung von Waffeln und verfügen über eine erste, in der Regel untere Backplatte, deren Backseite mit einer technischen Gravur versehen ist. Hierbei handelt es sich in der Regel um ein im Wesentlichen rautenartiges Muster, wobei die das Muster bildenden Gravurlinien zueinander parallel ausgerichtet sind und sich kreuzende Gravurlinien in der Regel einen 90 Grad Winkel aufweisen.

Die zweite Backplatte ist gravurlos gehalten, so dass die Oberfläche der ersten Backplatte größer ist als die Oberfläche der zweiten Backplatte. Hierdurch sind die Anhaftungskräfte an der ersten, mit Gravur versehenen Backplatte größer, so dass beim Öffnen der Backform das ausgebackene Waffelblatt auf der unteren, mit Gravur versehenen Backplatte haften bleibt.

Im Anschluss an den Backvorgang setzt ein Aufnahmewerkzeug, in der Regel ein Entnahmemesser, an der unteren Backplatte an. Das Entnahmemesser verfügt über voreilende Aufnahmezinken, zwischen denen Messerschneiden angeordnet sind. Die Aufnahmezinken greifen in die Gravurlinien ein und heben das ausgebackene Waffelblatt an, so dass die Messerschneiden in den übrigen Bereichen leicht unter das Waffelblatt einfahren können.

Insoweit ist die Gravur der unteren Backplatte ausschließlich technisch bedingt und erlaubt keine großen Gestaltungsfreiheiten. Einzig der Abstand zwischen den Gravurlinien ist in gewissem Maße veränderbar. Der Freiheit sind hier jedoch enge Grenzen gesetzt, damit das Zusammenspiel zwischen voreilenden und das Waffelblatt anhebenden Entnahmezinken und den dazwischen liegenden Messerschneiden reibungslos funktioniert.

US 2008/0113069 A1 offenbart eine konisch gerollte Waffel zur Befüllung mit Speiseeis. Bei der Herstellung dieser Waffel werden in diejenige von einem technischen Muster freigehaltene Seite Zuschlagstoffe, wie beispielsweise Mandelsplitter, eingebacken. Diese mit Zuschlagstoffen versehene Seite bildet beim Rollen des Waffelblattes zur Waffel die Außenseite.

US 2,358,452 A zeigt ein sogenanntes Waffeleisen, eine Waffelbackform für den Hausgebrauch. mit dieser werden biskuitartige, weiche Waffeln gebacken. Dieses Waffeleisen weist mit einer Gestaltung versehene, herausnehmbare Platten auf, die die Waffel mit einem Gestaltungelement versehen.

Ebenfalls Waffeln für Speiseeis sind in GB 508 707 A und GB 492 940 A offenbart. An einen in sphärischen Aufnahmeabschnitt schließt sich ein konischer oder kegelartiger Waffelabschnitt an, Die Außenoberfläche ist mit einem Muster versehen, wohingegen die Innenoberfläche Stege ausbildet, um eine Absinken von Speiseeiskugeln in den Kegelabschnitt zu verhindern. Diese Waffeln werden durch das Einspritzen von Teig in eine Form und anschließendes Entformen der Waffel hergestellt.

In US 2,759,826 A ist eine topfartige Waffel offenbart, deren Aufnahmeraum durch Stege in Teilräume unterteilt ist. Die Außenwand ist mit einem Schriftzug versehen.

Aufgabe der Erfindung ist es deshalb zunächst, eine Waffel zu schaffen, deren sichtbare Außenoberfläche eine individualisierbare Gestaltung ermöglicht.

Gelöst wird diese Aufgabe von einer Waffel mit den Merkmalen des Anspruches 1, insbesondere von dessen kennzeichnenden Merkmalen, wonach die von einem technischen Muster freie zweite Seite mit einem gestaltenden Muster versehen ist wobei das gestaltende Muster vom Waffelblattteig selbst ausgebildet ist
Die Erfindung hat erkannt, dass die Funktion des technischen Musters der Waffel im industriellen Prozess zwingend erforderlich ist, so dass die mit dem technischen Muster versehene Waffelseite keine Gestaltungsfreiheit gibt. Eine Gestaltung ist jedoch auf der bislang gravurfreien Seite ohne weiteres möglich, sofern die Oberfläche der zweiten Seite kleiner ist als die Oberfläche der ersten, mit dem technischen Muster versehenen Seite. Eine individuelle Gestaltung dieser zweiten Seite ermöglicht es, der Waffel ein von den Waffeln aus dem Stand der Technik abweichendes Muster zu geben, was zur Waffelindividualisierung und somit zur Abgrenzung vom Wettbewerb dienen kann. Die Erfindung hat darüber hinaus erkannt, dass es möglich ist, diese individuell gestaltete zweite Seite der Waffel als Außenseite auszubilden, so dass die erste Seite die Innenseite der Waffel bildet und das technischen Muster auf der Innenoberfläche der Waffel angeordnet ist.

Besonders zu erwähnen ist, dass das gestaltende Muster frei auf der zweiten Seite anordenbar ist. In Folge dessen steht die gesamte Außenfläche zur Verfügung, um individuelle Muster aufzubringen.

Bei den Mustern kann es sich um den Schriftzug oder Markenzeichen des Herstellers, oder sonstige Muster handeln. Es ist theoretisch denkbar, kundenspezifische Muster auf die Waffel aufzubringen oder Informationen zu Inhaltsstoffen der mit der Waffel verpackten Nahrungsmittel, beispielsweise Speiseeis aufzuprägen.

Die erfindungsgemäße Aufgabe wird auch gelöst von einer Backform mit den Merkmalen des Anspruches 3, insbesondere mit dessen kennzeichnenden Merkmalen, wonach die zweite Backplatte mit einer Gestaltungsgravur versehen ist, die das Waffelblatt mit einem gestaltenden Muster versieht.

Dabei ist insbesondere vorgesehen, dass die Gestaltungsgravur Teil eines Wechselelementes ist, welches in einer Wechselaufnahme der zweiten Backplatte einsitzt.

Hinsichtlich der Möglichkeit, die zweite Backplatte mit einer Gestaltungsgravur zu versehen, und der diesbezüglichen Vorteile, wird auf das zuvor zur Waffel gesagte verwiesen.

Besonders hervorzuheben ist jedoch die besonders bevorzugte Ausführungsform. Durch die Ausrüstung der Backplatte mit einer Wechselaufnahme für ein Wechselelement, welches mit der Gestaltungsgravur versehen ist, lassen sich unterschiedliche Gestaltungsgravuren recht kostengünstig auf Waffeln aufbringen. Die Backform selbst bleibt im Wesentlichen unangetastet, da lediglich das Wechselelement mit der jeweiligen Gestaltungsgravur ausgetauscht wird. Dies verringert nicht nur die Herstellungs- und Anschaffungskosten der Backform selbst. Auch die Rüstzeiten für den Wechsel der Gravur vermindern sich im Vergleich zum Austausch einer vollständigen Backform.

Weitere Vorteile der Erfindung sowie ein besseres Verständnis derselben folgt aus der nachfolgenden Beschreibung eines Ausführungsbeispiels. Es zeigen:
Figur 1: eine untere Backplatte einer erfindungsgemäßen Backform zur Herstellung einer Waffel,
Figur 2: eine obere Backplatte einer erfindungsgemäßen Backform mit einer Wechselaufnahme zur Herstellung einer Waffel,
Figur 3: ein Wechselelement mit Gestaltungsgravur für die Wechselaufnahme der Backplatte gemäß Fig.2,
Figur 4: die Backplatte gemäß Fig. 2 mit dem Wechselelement nach Fig. 3 in der Wechselaufnahme,
Figur 5: die Backplatte gemäß Fig. 1 mit Teigauftrag,
Figur 6: ein erfindungsgemäßes Waffelblatt mit Gestaltungsgravur,
Figur 7: eine Waffel aus dem Stand der Technik,
Figur 8: eine erfindungsgemäße Waffel mit außenliegender Gestaltungsfläche.

In den Figuren ist eine erfindungsgemäße Waffel insgesamt mit der Bezugsziffer 10 versehen.

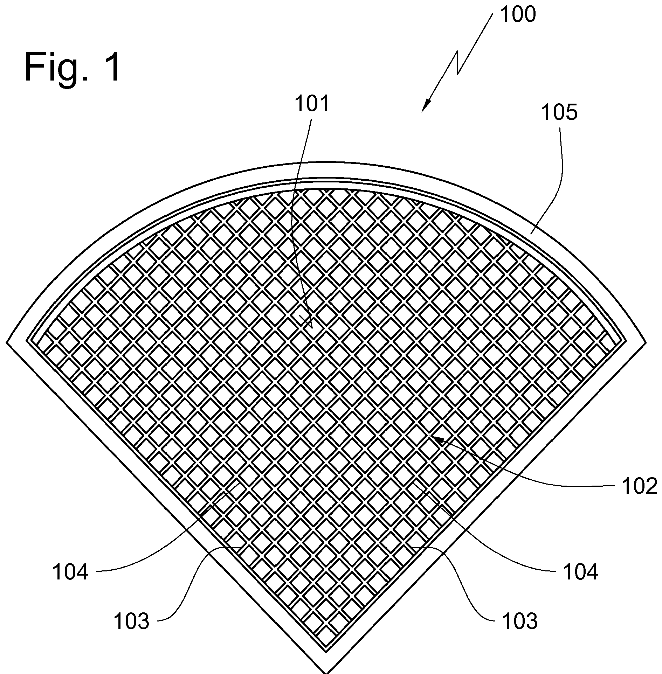

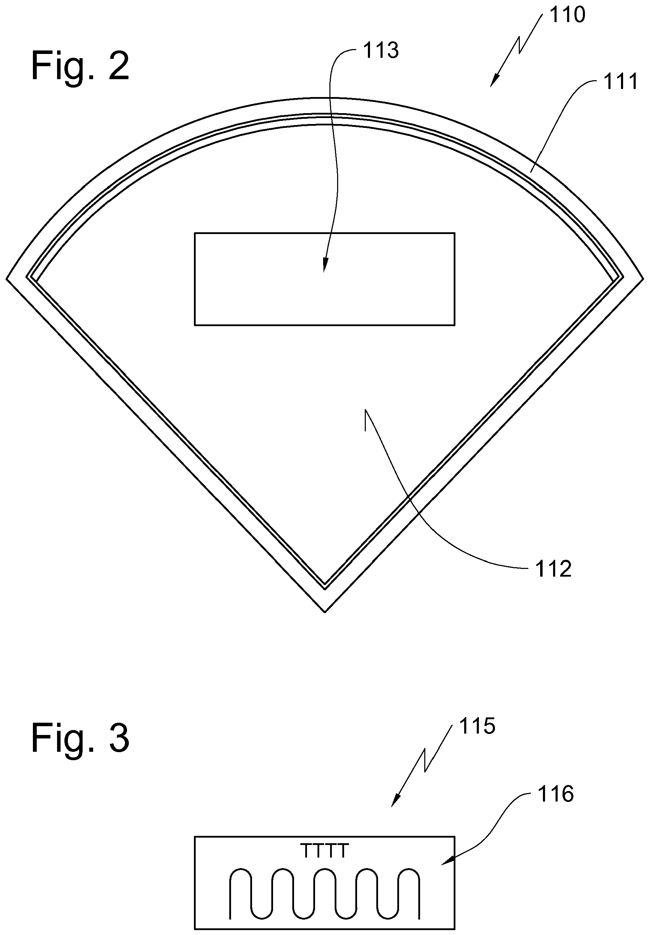

Diese erfindungsgemäße Waffel 10 wird mit einer Backform hergestellt, die aus einer unteren Backplatte 100 und einer oberen Backplatte 110 besteht, welche in Fig. 1 und Fig. 2 dargestellt sind.

Die untere Backplatte 100 in Fig. 1 verfügt über eine Backfläche 101. Die untere Backplatte 100 ist mit einer Gravur 102 versehen, die aus den Gravurlinien 103 und den Gravurlinien 104 gebildet ist.

Die Gravurlinien 103 sind parallel zueinander angeordnet. Die Gravurlinien 104 sind parallel zueinander angeordnet.

Die Gravurlinien 103 kreuzen die Gravurlinien 104 in einem rechten Winkel, wodurch sich ein technisches Muster ergibt, das im Wesentlichen rautenförmig ausgestaltet ist.

Die untere Backplatte 100 verfügt über einen ersten Abschlussrand mit der Bezugsziffer 105, an welchem der aufgetragene Teig beim Schließen der Backform anläuft.

In der Fig. 2 ist eine obere Backplatte 110 der erfindungsgemäßen Backform abgebildet. Die obere Backplatte 110 weist einen zweiten Abschlussrand 111 auf, an welchem der aufgetragene Teig beim Schließen der Backform anläuft.

Die Backfläche 112 der oberen Backplatte 110 ist weitestgehend eben ausgestaltet und im Gegensatz zu der unteren Backplatte 100 frei von einem technischen Muster.

Die obere Backplatte 110 weist eine Ausnehmung 113 auf, die Teil einer nicht näher dargestellten Wechselaufnahme ist. In diese Wechselaufnahme wird ein Wechselelement 115 formschlüssig eingefügt, so dass die Ausnehmung 113 bei eingesetztem Wechselelement 115 geschlossen ist.

In Figur 3 ist das Wechselelement 115 dargestellt. Die Oberfläche des Wechselelementes 115 ist mit einer Gestaltungsgravur 116 versehen.

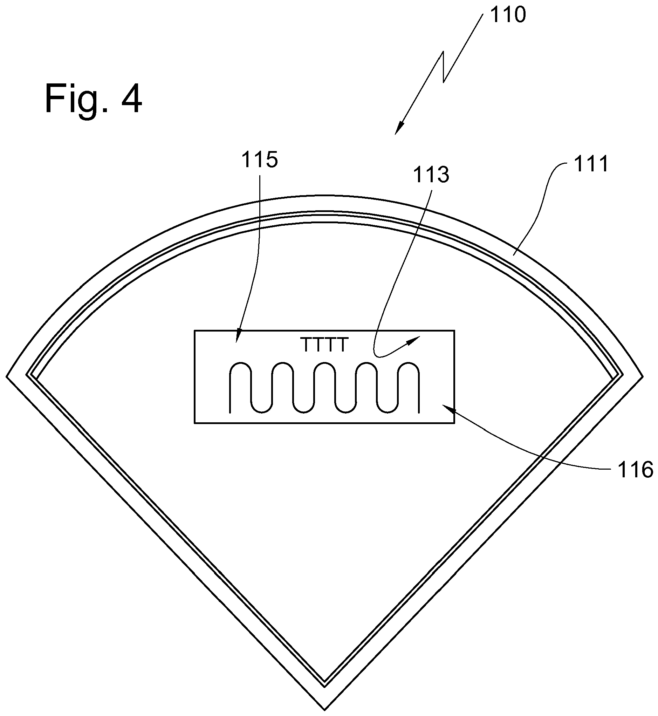

In der Figur 4 ist die obere Backplatte 110 gemäß Fig. 2 mit eingesetztem Wechselelement 115 dargestellt. Das Wechselelement 115 sitzt in der Ausnehmung 113 ein. Die Oberfläche der Gestaltungsgravur 116 des Wechselelements 115 weist zur unteren Backplatte 100.

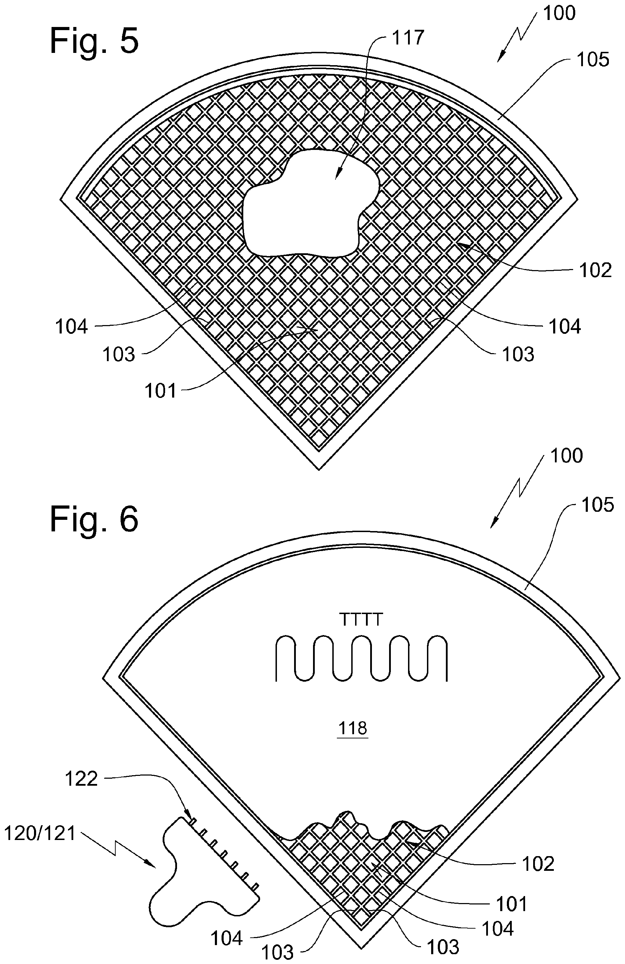

Die Figur 5 zeigt die untere Backplatte 100 gemäß Fig. 1, auf welche eine Teigmasse 117 aufgetragen ist. Die Teigmasse 117 wird beim Schließen der Backform zwischen der unteren Backplatte 100 und obere Backplatte 110 gleichmäßig verteilt und zu einem Waffelblatt 118 ausgebacken.

Das ausgebackene Waffelblatt 118 ist in Fig. 6 abgebildet. Dargestellt ist die zur oberen Backplatte 110 weisende Gestaltungsfläche 119 des Waffelblattes 118, welche im Backverfahren durch Auflegen der oberen Backplatte 110, mit der Gestaltung der Gestaltungsgravur 116 des Wechselelementes 115 versehen wurde.

Die zweite Waffelblattseite des Waffelblattes 118, die mit der Gestaltung der Gestaltungsgravur 116 versehen wurde und frei von technischen Mustern ausgebildet ist, wird im Folgenden als Gestaltungsseite bezeichnet.

Die erste Waffelblattseite des Waffelblattes 118, die hier nicht näher dargestellt ist, ist mit dem technischen Muster ausgestaltet. Sie wird folgend auch als technische Seite bezeichnet.

Darüber hinaus ist ein Aufnahmewerkzeug 120 dargestellt, welches in Form eines Entnahmemessers 121 ausgebildet ist. Das Entnahmemesser 121 weist sogenannte Aufnahmezinken 122 auf, welche in die Gravurlinien 103, 104 der unteren Backplatte 100 greifen. Die Aufnahmezinken 122 untergreifen das ausgebackene Waffelblatt 118 und lösen dieses von der unteren Backplatte 100 ab. Dieser Vorgang wird durch nicht näher dargestellte Messerschneiden des Entnahmemessers 121 gefördert.

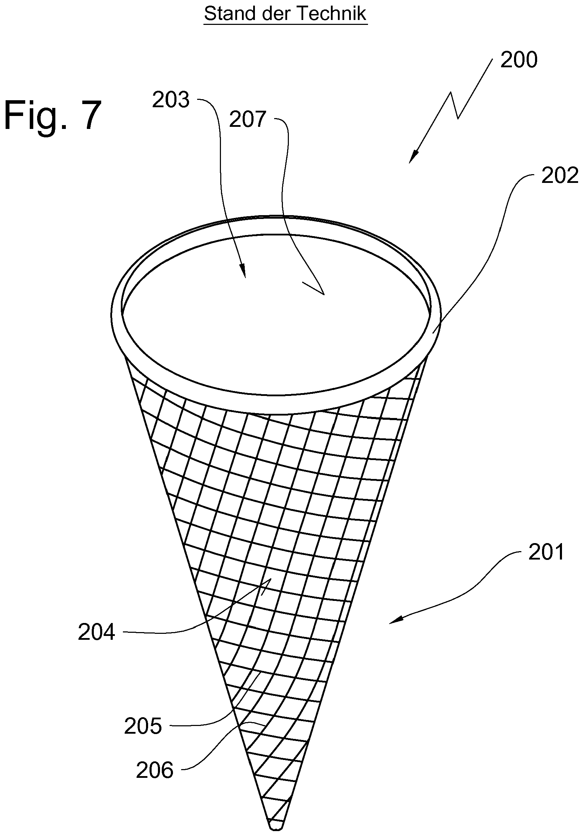

Die Figur 7 zeigt eine Eiswaffel 200 aus dem Stand der Technik. Bei dieser Eiswaffel 200 handelt es sich um ein aus einem Waffelblatt aufgerollten ersten Kegel 201, dessen Rand 202 eine erste Waffelöffnung 203 definiert.

Die Außenoberfläche 204 des Kegels 201 ist mit Stegen 205 und 206 versehen, die durch die Gravur 102 der unteren Backplatte 100 bedingt sind. Entsprechend der Gravurlinien 103,104 sind die Stege 205 und die Stege 206 jeweils parallel zueinander angeordnet und im Kreuzungsbereich in der Regel rechtwinkelig zueinander ausgerichtet. Die Innenoberfläche 207 des ersten Kegels 201 ist gravurlos gehalten.

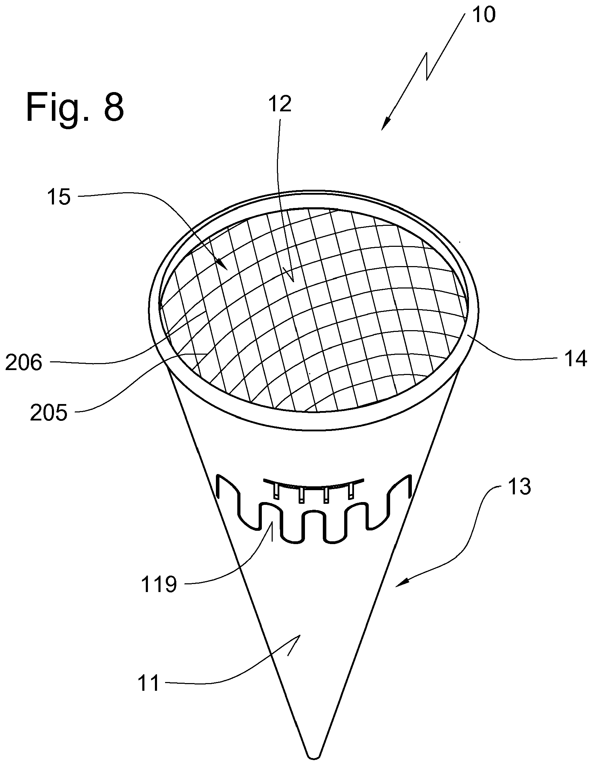

In Figur 8 ist die erfindungsgemäße Waffel 10 dargestellt. Bei dieser Waffel 10 handelt es sich um ein aus dem Waffelblatt 118 aufgerollten zweiten Kegel 13, dessen Rand 14 eine zweite Waffelöffnung 15 definiert.

Die Gestaltungsfläche 119 bildet die Außenoberfläche 11 der Waffel 10, welche frei von technischen Mustern ausgestaltet ist. Die Gestaltungsgravur 116 des Waffelblattes 118 entspricht der in Fig. 4 dargestellten Gestaltungsgravur 116.

Die Innenoberfläche 12 ist mit Stegen 205 und 206 versehen, die durch die Gravur 102 der unteren Backplatte 100 bedingt sind. Die Stege 205 und 206 sind entsprechend der Gravurlinien 103, 104. Im Kreuzungsbereich schließen sich die kreuzenden Stege 205 und 206 im Rechtenwinkel ein.

Die Herstellung der in Fig. 8 dargestellte Waffel 10 mittels einer Backform mit unterer Backplatte 100 und oberer Backplatte 110 wie in Fig. 5 beschrieben, erfolgt folgendermaßen:
Für den Backvorgang wird die Teigmasse 117 auf die untere Backplatte 100 aufgetragen. Auf die untere Backplatte 100 wird die obere Backplatte 110 aufgelegt. Hierdurch wird die Teigmasse 117 gleichmäßig verteilt und zu einem Waffelblatt 118 ausgebacken.

Durch die technische Gravur der unteren Backplatte 100 erhält diese, im Gegensatz zu der oberen Backplatte 110, eine größere Oberfläche.

Da die Teigmasse 117 bei dem Auflegen der oberen Backplatte 110 in die Gravurlinien 103 und 104 der unteren Backplatte 100 eindringt, bilden sich auf der den Gravurlinien 103, 104 zugewandten Waffelseite die Stege 205 und 206. Durch die Ausbildung der Stege 205 und 206 wird die Oberfläche dieser Waffelseite vergrößert. Hierdurch sind die Haltekräfte des Waffelblattes 118 an der unteren Backplatte 100 größer als an der oberen Backplatte 110. Auf diese Weise wird die Anhaftung des Waffelblattes 118 an die untere Backplatte 110 gewährleistet.

Infolge dessen löst sich das Waffelblatt 118 beim Öffnen der Backform von der oberen Backplatte 110 und haftet an der unteren Backplatte 100 an.

Nach dem Backvorgang wird das Waffelblatt 118 unter Zuhilfenahme des Entnahmemessers 121 von der unteren Backplatte 100 abgelöst, wobei die Aufnahmezinken 122 in die Gravurlinien 103, 104 greifen. Die Aufnahmezinken 122 untergreifen das ausgebackene Waffelblatt 118.

Nach Ablösung des Waffelblattes 118 wird die Waffelblattseite mit dem technischen Muster - abweichend vom Stand der Technik - innenliegend in einer Wickelmaschine zu einer kegelförmigen Waffel 10 aufgerollt.

Durch das Wickeln wird die Gestaltungsfläche 119 zur Außenoberfläche 11 der Waffel 10 und das technische Muster mit seinen Stegen 205, 206 ist auf der Innenoberfläche 12 der Waffel 10 angeordnet.

Der wesentliche Vorteil der erfindungsgemäßen Waffel 10 liegt in der Gestaltungsfreiheit der Gestaltungsfläche 119. Auf der Gestaltungsfläche 119 sind die Gestaltungen frei von technischen Zwängen möglich und bieten somit die Möglichkeit der individuellen, kundenspezifischen Gestaltung.

Das gestaltende Muster ist frei auf der Waffel 10 anordenbar, wobei die Gestaltung in jeglicher Ausrichtung, Form und Größe, welche maximal durch die Fläche des Waffelblattes 118 begrenzt ist, denkbar ist.

Es ist lediglich darauf zu achten, dass die Oberfläche der Gestaltungsfläche 119 kleiner ist, als die Oberfläche der Seite des Waffelblattes 118, die mit dem technischen Muster ausgestaltet ist, um ein definiertes Ablösen beim Öffnen der Backform zu gewährleisten.

Bei den kundenspezifischen Mustern kann es sich um jegliche Muster handeln, wie beispielsweise den Schriftzug oder das Markenzeichen des Herstellers, die Informationen zu Inhaltsstoffen der mit der Waffel verpackten Nahrungsmittel, beispielsweise Speiseeis oder das Haltbarkeitsdatum, wodurch die Abgrenzung zum Wettbewerb erhöht wird.

Ist die obere Backplatte 110 mit einer Wechselaufnahme 114 versehen, sind verschiedene Gestaltungsmöglichkeiten auf der Gestaltungsseite der Waffel 10 möglich.

Durch die Ausrüstung der oberen Backplatte 110 mit einer Wechselaufnahme 114 für ein Wechselelement 115, welches mit der Gestaltungsgravur 116 versehen ist, lassen sich verschiedene Gestaltungsgravuren recht kostengünstig auf der Gestaltungsseite der Waffel 10 aufbringen. Die Backform selbst wird nicht ausgewechselt, da lediglich das Wechselelement 115 mit der jeweiligen Gestaltungsgravur 116 ausgetauscht wird. Dies verringert die Herstellungs- und Anschaffungskosten der Backform.

Des Weiteren werden die Rüstzeiten für den Wechsel der Gravur vermindern, da im Vergleich zum Austausch einer vollständigen Backform, lediglich die obere Backplatte 110 mit der Wechselaufnahme 114 ausgetauscht werden muss.

### BEZUGSZEICHENLISTE

- 10: Waffel
- 11: Außenoberfläche von 10
- 12: Innenoberfläche von 10
- 13: Kegel von 10
- 14: Rand von 10
- 15: Waffelöffnung von 10

- 100: untere Backplatten
- 101: Backfläche von 100
- 102: Gravur
- 103: Gravurlinien
- 104: Gravurlinien
- 105: erster Abschlussrand

- 110: obere Backplatten
- 111: zweiter Abschlussrand
- 112: Backfläche von 110
- 113: Ausnehmung
- 114: Wechselaufnahme
- 115: Wechselelement
- 116: Gestaltungsgravur
- 117: Teigmasse
- 118: Waffelblatt
- 119: Gestaltungsfläche
- 120: Aufnahmewerkzeug
- 121: Entnahmemesser
- 122: Aufnahmezinken

- 200: Eiswaffel
- 201: Kegel
- 202: Rand von 200
- 203: Waffelöffnung
- 204: Außenfläche von 201
- 205: Stege
- 206: Stege
- 207: Innenoberfläche von 201

## Patentansprüche

1. Industriell hergestellte Waffel (10) aus einer Teigmasse (117) als Nahrungsmittel in Form eines kegelförmig aufgerollten Waffelblattes (118) zur Aufnahme von Speiseeis,
- mit einer ersten Seite, deren Oberfläche mittels eines technischen Musters vergrößert ist, um während des Herstellungsverfahrens eine definierte Anhaftung an einer der Backplatten (100) sicherzustellen und Angriffsflächen für ein Aufnahmewerkzeug (120) zu bieten, insbesondere mit einem Muster aus parallel zueinander angeordneten Stegen (205, 206) oder Nuten, wobei die erste Seite die Innenseite der Waffel bildet, und das technische Muster auf der Innenoberfläche der Waffel ausgebildet ist,
- mit einer zweiten Seite, deren Oberfläche frei von einem technischen Muster und deshalb kleiner ist als die der ersten Seite, wobei die zweite Seite die Außenseite der Waffel (10) bildet,
**dadurch gekennzeichnet, dass**
- die von einem technischen Muster freie zweite Seite mit einem gestaltenden Muster versehen ist, wobei das gestaltende Muster von der Teigmasse (117) ausgebildet ist und das gestaltende Muster auf der Außenoberfläche (11) angeordnet ist.,

2. Waffel (10) nach Anspruch 1, **dadurch gekennzeichnet, dass** das gestaltende Muster frei auf der zweiten Seite anordenbar ist.

3. Backform zur industriellen Herstellung eines Waffelblattes (118), welches zu einer industriell hergestellten Waffel (10) gemäß einem der Ansprüche 1 bis 2 formbar ist,
- mit einer ersten Backplatte (100), deren Backseite mit einer technischen Gravur versehen ist, mittels derer die Oberfläche des Waffelblattes (118) vergrößert wird, um eine Anhaftung an dieser ersten Backplatte (100) zu gewährleisten,
- mit einer zweiten Backplatte (110), die gravurlos gehalten ist, so dass deren Backseite eine Oberfläche aufweist, die kleiner ist als die Oberfläche der ersten Backplatte,
**dadurch gekennzeichnet, dass** die zweite Backplatte (110) mit einer Gestaltungsgravur (116) versehen ist, die das Waffelblatt (118) mit einem gestaltenden Muster versieht.

4. Backform nach Anspruch 3, **dadurch gekennzeichnet, dass** die Gestaltungsgravur (116) Teil eines Wechselelementes (115) ist, welches in einer Wechselaufnahme (114) der zweiten Backplatte (110) einsitzt.

5. Verfahren zur Herstellung einer aus einem Waffelblatt (118) kegelförmig aufgerollten Waffel (10) nach einem der Ansprüche 1 bis 2 in einer Backform nach einem der Ansprüche 3 oder 4, mit folgenden Verfahrensschritten:
1.) Aufbringen einer Teigmasse (117) auf die untere Backplatte (100),
2.) Auflegen der oberen Backplatte (110) auf die untere Backplatte (100) und hierdurch gleichmäßige Verteilung der Teigmasse (117),
3.) Ausbacken der Teigmasse (117).

## Claims

1. Industrially produced waffle (10) made from a dough (117), as a foodstuff in the form of a conically rolled-up waffle blade (118) to receive ice cream,
- with a first side whose surface is enlarged by means of a technical pattern in order to ensure, during the manufacturing process, a defined adherence to one of the baking plates (100) and to provide contact surfaces for a receiving tool (120), in particular with a pattern made from bars (205, 206) or grooves arranged parallel to one another, wherein the first side forms the inside of the waffle and the technical pattern is designed on the inner surface of the waffle,
- with a second side whose surface is free from a technical pattern and therefore smaller than the first side, wherein the second side forms the outside of the waffle (10),
**characterised in that**
- the second side free from a technical pattern is provided with a design pattern, wherein the design pattern is formed by the dough (117) and the design pattern is arranged on the outer surface (11).

2. Waffle (10) according to claim 1, **characterised in that** the design pattern can be freely arranged on the second side.

3. Baking mould for industrially producing a waffle blade (118), which can be formed into an industrially produced waffle (10) according to any one of claims 1 to 2,
- with a first baking plate (100) whose back side is provided with a technical engraving by means of which the surface of the waffle blade (118) is enlarged in order to ensure adherence to this first baking plate (100),
- with a second baking plate (110) which is kept free of engraving such that its back side has a surface that is smaller than the surface of the first baking plate, **characterised in that** the second baking plate (110) is provided with a design engraving (116) which provides the waffle blade (118) with a design pattern.

4. Baking mould according to claim 3, **characterised in that** the design engraving (116) is part of a switch element (115) which sits in a switch receiver (114) of the second baking plate (110).

5. Method for producing a waffle (10) conically rolled-up from a waffle blade (118) according to any one of claims 1 to 2 in a baking mould according to any one of claims 3 or 4, with the following method steps:
1) applying a dough (117) on the lower baking plate (100),
2) placing the upper baking plate (110) on the lower baking plate (100) and, in doing so, evenly distributing the dough (117)
3) baking the dough (117).

## Revendications

1. Gaufrette (10) fabriquée industriellement, à partir d'une masse de pâte (117), en tant que produit alimentaire en la forme d'une feuille de gaufrette (118) enroulée en forme de cône, pour recevoir de la glace, ayant :
- une première face, dont la surface est augmentée au moyen d'un motif technique afin d'assurer une adhésion définie à l'une des plaques de cuisson (100) pendant le processus de fabrication et de fournir des surfaces de contact pour un outil récepteur (120), en particulier ayant un motif de bandes (205, 206) ou rainures disposées parallèlement entre elles, la première face formant la face intérieure de la gaufrette, et le motif technique étant réalisé sur la surface intérieure de la gaufrette,
- une deuxième face dont la surface est dépourvue de motif technique, et est, de ce fait, plus petite que celle de la première face, la deuxième face formant la face extérieure de la gaufrette (10),
**caractérisée en ce que** la deuxième face dépourvue de motif technique est dotée d'un motif de façonnage, le motif de façonnage étant formé de la masse de pâte (117) et le motif de façonnage étant disposé sur la surface extérieure (11).

2. Gaufrette (10) selon la revendication 1, **caractérisée en ce que** le motif de façonnage peut être disposé librement sur la deuxième face.

3. Moule de cuisson pour la fabrication industrielle d'une feuille de gaufrette (118) qui peut être formé pour une gaufrette (10) fabriquée industriellement selon l'une des revendications 1 à 2, ayant :
- une première plaque de cuisson (100) dont la face de cuisson est pourvue d'une gravure technique, au moyen de laquelle la surface de la gaufrette (118) est augmentée, afin de garantir une adhésion à cette première plaque de cuisson (100),
- une deuxième plaque de cuisson (110), qui est tenue sans gravure, de sorte que sa face de cuisson comporte une surface qui est plus petite que la surface de la première plaque de cuisson,
**caractérisé en ce que** la deuxième plaque de cuisson (110) est dotée d'une gravure de conception (116) qui prévoit la feuille de gaufrette (118) avec un motif de façonnage.

4. Moule de cuisson selon la revendication 3, **caractérisé en ce que** la gravure de conception (116) est partie d'un élément de changement (115), qui s'insère dans un logement de changement (114) de la deuxième plaque de cuisson (110).

5. Procédé pour la fabrication d'une gaufrette (10) enroulée en forme de cône à partir d'une feuille de gaufrette (118), selon l'une des revendications 1 à 2 dans un moule de cuisson selon l'une des revendications 3 ou 4, comportant les étapes de procédé suivantes :
1) disposition d'une masse de pâte (117) sur la plaque de cuisson inférieure (100),
2) pose de la plaque de cuisson supérieure (110) sur la plaque inférieure (100) et répartition ainsi régulière de la masse de pâte (117),
3) cuisson de la masse de pâte (117).
